# EUROPEAN PATENT SPECIFICATION

(11) **EP 0 425 573 B1**
(45) Date of publication and mention of the grant of the patent: **16.09.1998**
(21) Application number: 89908902.3
(22) Date of filing: 29.06.1989
(51) Int. Cl.: G06T 15/50

(54) **TEXTURE MAPPING FOR COMPUTER GRAPHICS DISPLAY CONTROLLER SYSTEM**
TEXTURABBILDUNG FÜR DIE STEUEREINHEIT EINES COMPUTERGRAFIKBILDSCHIRMS
TOPOGRAPHIE DE TEXTURE POUR SYSTEME CONTROLEUR D'AFFICHAGE INFOGRAPHIQUE

(30) Priority: 06.07.1988 US 215620
(43) Date of publication of application: 08.05.1991
(73) Proprietor: Hewlett-Packard Company, Palo Alto, California 94304 (US)
(72) Inventor: LATHROP, Olin, G., Chelmsford, MA 01824 (US); VOORHIES, Douglas, A., Chelmsford, MA 01824 (US); KIRK, David, B., Chelmsford, MA 01824 (US)
(74) Representative: Holdcroft, James Gerald, Dr.
(86) International application number: US8902906
(87) International publication number: WO9000774

(56) References cited:
- US-A- 4 225 861
- US-A- 4 475 161
- US-A- 4 564 915
- US-A- 4 590 463
- US-A- 4 615 013
- US-A- 4 710 806
- PATENT ABSTRACTS OF JAPAN vol. 10, no. 220 (P-482)(2276) July 31, 1986 & JP-A- 61 55 781 (MITSUBISHI ) March 20, 1986

## Description

### Reference to Related Application

This application is a continuation-in-part of United States Patent Application Serial No. 077,202, assigned to Apollo Computer, Inc., corresponding to WO89/01206 published 9 February 1989.

### Background of the Invention

The present invention relates generally to the field of digital computers, and in particular, relates to apparatus for controlling computer graphics displays.

An important application of computer graphics involves the creation of realistic images of three dimensional objects. Designers of three dimensional objects such as automobiles, aircraft and other structures may wish to have a visual representation of a preliminary design, to facilitate implementation of interactive design changes prior to the prototype stage. Creating realistic computer generated images is a faster, less expensive and more effective method of evaluating preliminary designs than is constructing models and prototypes. In particular, computer generated images allow a greater number of alternative designs to be evaluated in a shorter time period. Often, the design work itself is performed on a computer system, using a computer aided design (CAD) or other engineering workstation. In such a case, a digitized representation of the three dimensional object is already available to use as the basis for the computer generated image.

Simulation systems are another application for computer generated three dimensional images. Such systems utilize images which not only must appear realistic, but which also must change dynamically.

One approach which helps produce visual realism in computer generated images is that of surface shading. Variations in surface shading add visual information of the type normally found in a visual environment, so that an observer's depth perception mechanisms can properly resolve any ambiguities caused when three dimensional objects are projected into two dimensions. Shaded image generation is therefore an important capability of modern graphics workstations. Moreover, engineers and designers utilizing such workstations seek "solid-looking" models to convey more shape information. Shaded image generation helps create realistic solid-looking models.

Realism in computer generated images is also enhanced by surface detail, referred to as "texture." In computer graphics, "texture" is generally considered to subsume two aspects. The first aspect of texture is adding the appearance of roughness to a smooth surface. Incorporating the appearance of roughness to a surface is primarily a mathematical normal vector perturbation operation. The second aspect is the addition of a separately specified pattern to a smooth surface. After the pattern is added, the surface still appears smooth. Adding a pattern to a smooth surface in this way is largely a mapping operation, referred to as "texture mapping."

Texture mapping is an important technique in computer graphics and several methods have been developed for implementing texture mapping. One such method is described in "Real-Time Manipulation of Texture Mapped Surfaces," Oka, et al, Computer Graphics, Volume 21, No. 4, pp. 181-188, 1987. Texture mapping is also discussed generally in Rogers, David F., "Procedural Elements For Computer Graphics," McGraw-Hill, 1985, pp. 354-363.

Because the basis of adding texture patterns to three dimensional surfaces is a mapping operation, texture mapping involves a transformation from one coordinate system to another. In particular, these coordinate systems can be referred to as texture space, object space, and image space. The texture pattern is defined in a two-dimensional coordinate system (u,v) in texture space, the three dimensional surface is defined in a three-dimensional coordinate system (x', y', z') in object space and the output display screen is defined in a two-dimensional coordinate system (x,y) in image space. Thus, conceptually, texture mapping transforms a texture plane (u,v) onto a three dimensional surface, (x', y', z'), and then projects the transformed texture plane into the output display screen coordinate system (x,y).

An example of conventional texture mapping is a computer graphics rendering of the label on a soft drink can. An image of the "unrolled" label must first be generated. The "unrolled" label is defined in texture space. Next, the form of the can is rendered in object space. Conventionally, the cylindrical form of the can is rendered by generating a set of polygons. The geometrical form of the can is thus defined in object space. The testure (unrolled label) is transformed onto the three dimensionsl surface representation in object space (the cylindrical form), and then is projected into image space (the output display screen). The color and intensity of each picture element (pixel) in the display is accordingly a function of the transformation of the texture into object space and the mapping from object space into image space.

Prior art texture mapping methods are computationally intensive, requiring the calculation of large groups of values. Moreover, most prior art texture mapping methods exist in exclusively software implementations, requiring the execution of multiple-cycle program steps. Conventional texture mapping systems are therefore slow and require considerable processor and memory resources.

One prior art publication, Yan *et al,* U.S. -A-4,615,013, discloses a texture generation apparatus in which pixel coordinates (i.e., image space coordinates) are transformed to earth coordinates (i.e., object space coordinates) which, in turn, are used to generate addresses for accessing a texture table to retrieve texture values. The apparatus stores so-called "near" and "far" textures, the latter of which can be interpolated to provide image smoothing.

A drawback of the mechanism discussed by Yan is that it is computationally intensive, e.g., insofar as it requires mapping into object space.

In view of the deficiences of Yan *et al,* and other prior art, there accordingly exists a need for texture mapping methods and apparatus for computer graphics display controller systems that can execute texture mapping at high speed, with minimum cost, complexity and processor and memory overhead.

It is thus an object of the invention to provide improved texture mapping apparatus.

It is a further object of the invention to provide texture mapping apparatus which can execute texture mapping in real time.

It is another object of the invention to provide an efficient and inexpensive system for texture mapping, utilizing interpolation techniques.

Other general and specific objects of the invention will in part be obvious and will in part appear hereinafter.

### Summary of the Invention

These objects are attained by the texture mapping apparatus as set out in claim 1 of the appended claims.

Texture mapping apparatus according to another aspect of the invention includes illumination value elements, responsive to selected addresses corresponding to selected display pixels, for generating illumination values corresponding to respective ones of the display pixel addresses. This aspect of the invention also includes polynomial logic elements, responsive to the selected pixel addresses, for calculating a polynomial texture index value for each selected pixel address, each texture index value being associated with a respective texture value for each selected pixel address. The invention also includes combining elements, responsive to the illumination values and the texture index values, for arithmetically combining respective ones of the illumination values and the texture values to generate display color values for the selected pixels.

In accordance with a further aspect of the invention, the illumination value elements include illumination interpolation elements for interpolating initial illumination values to generate other illumination values.

In another aspect of the invention, the polynomial logic elements include elements for calculating polynomials of less than or equal to order two, and incremental evaluation elements for executing incremental evaluation of the polynomials.

In a further aspect of the invention, the bit-map data interpolation elements include texture index interpolation elements for generating the texture index values. Additionally, the incremental evaluation elements include forward differencing elements for evaluating the selected polynomials.

Another aspect of the invention provides texture mapping apparatus including bit-map data value elements, responsive to selected addresses corresponding to selected display pixels, for generating illumination values corresponding to respective ones of the display pixel addresses. This aspect of the invention also provides texture table elements for storing texture values indexed by polynomial functions of the selected pixel addresses. The texture table elements include mip-map elements for storing indexed differently scaled mappings of the texture values. The differently scaled mappings are selected by at least one texture table parameter. This aspect of the invention further provides combining elements, in electrical circuit with the illumination value elements and the texture table elements, for arithmetically combining respective ones of the illumination values and the texture values associated with a selected one of the differently scaled mappings to generate display color values for the selected pixels.

The invention also includes partial derivative elements, in electrical circuit with the texture table elements, for computing partial derivatives of the at least one texture table parameter with respect to the selected pixel addresses. In conjunction with the partial derivative elements, the invention provides scaling elements, in electrical circuit with the partial derivative elements and the texture table elements, for selecting, responsive to the computed partial derivatives, one of the mappings of the texture values for transmitting texture values to the combining elements.

In one aspect of the invention, the texture table elements include limiting elements for selectively limiting the range of mappings selectable by said at least one texture table parameter.

In another aspect of the invention, the polynomial logic elements include non-incremental evaluation elements for executing non-incremental evaluation of the selected polynomials.

In a further aspect of the invention, the non-incremental evaluation elements include elements for executing direct evaluation of the selected polynomials. This aspect of the invention provides elements for executing spline functions utilizing values of selected control points.

### Brief Description of the Drawings

For a fuller understanding of the nature and objects of the invention, reference should be made to the following detailed description and the accompanying drawings, in which:
FIGURE 1 is a block diagram of a display controller system incorporating texture mapping apparatus according to the invention;
FIGURE 2 depicts the conceptual basis of mapping of information from texture space to object space to image space;
FIGURE 3 depicts a computer graphics rendering of a surface without texture generated by the system of FIGURE 1;
FIGURE 4 depicts a surface with added texture information generated by the system of FIGURE 1;
FIGURE 5 is a block diagram giving detail of texture mapping apparatus according to the invention; and
FIGURE 6 depicts the information storage hierarchy of the texture table map of FIGURE 5.

### Description of Illustrated Embodiments

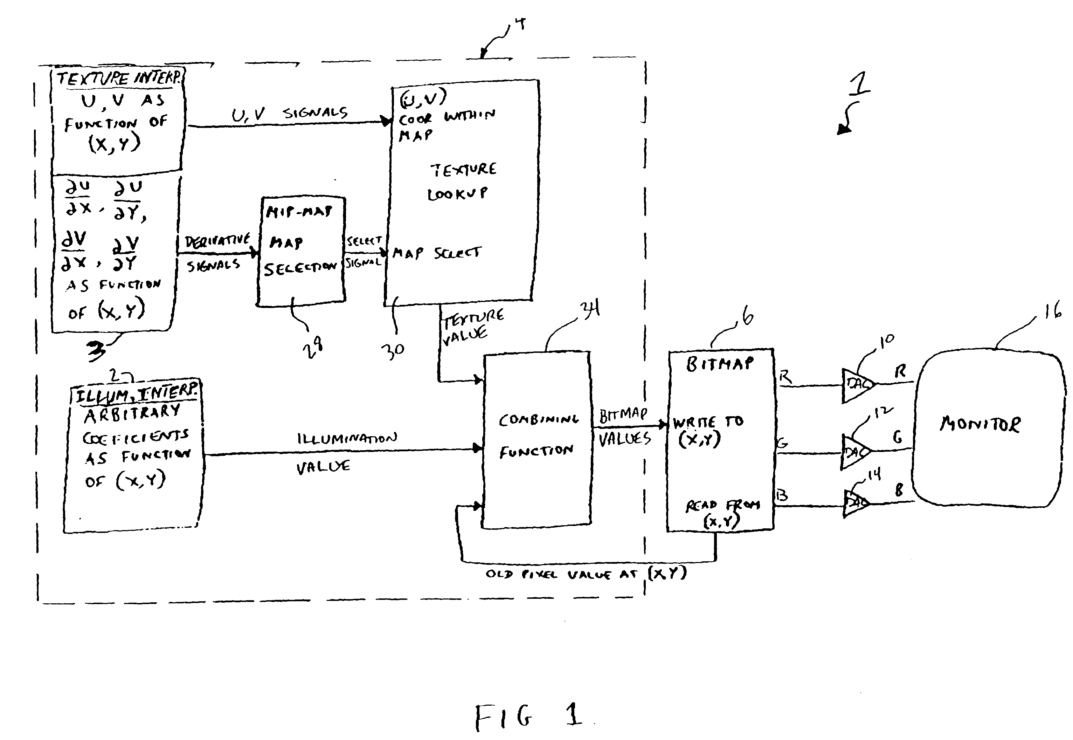

FIGURE 1 is a block diagram of a display controller system 1 incorporating a texture mapping processor 4 according to the invention. The texture processor 4 includes an interpolation module 2 for generating selected coefficients representative of "illumination values." The term "illumination values" as used herein includes, but is not limited to, alpha, red, green and blue values familiar to those skilled in the art. These illumination values are a function of the X and Y address values (X,Y) for display pixels mapped into bitmap 6 and displayable on monitor 16. Thus, the illumination values generated by interpolation module 2 include alpha, red, green and blue (a, R, G, B) values for pixels mapped into bitmap 6 and displayable on monitor 16.

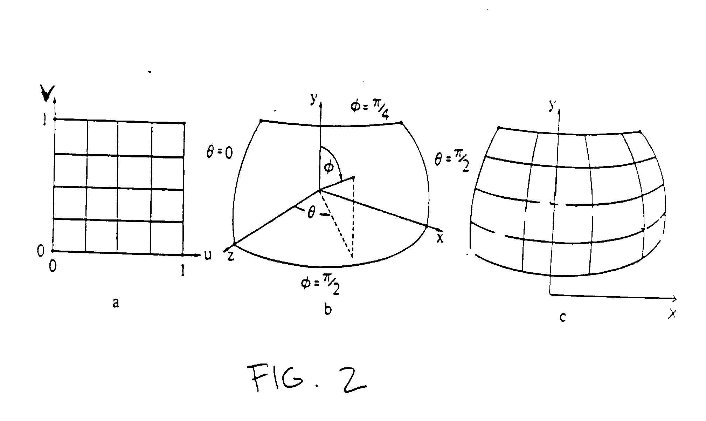

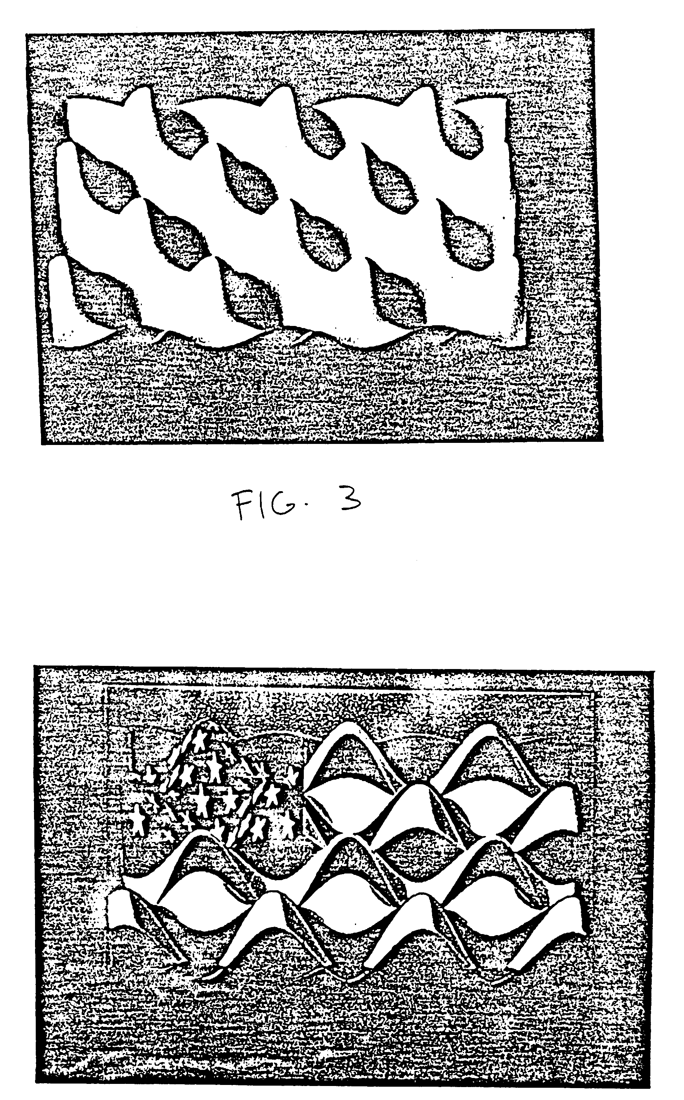

Texture processor 4 also includes a texture parameter interpolation section 3 for generating, in a manner discussed in greater detail below in connection with FIGURE 5, texture table parameters (U,V) and derivative signals dU/dX, dU/dY, dV/dX, and dV/dY. The derivative signals and parameters U and V are a function of pixel address (X,Y).

The U and V signals generated by texture parameter interpolation module 3 are asserted as a (U,V) address into a texture lookup table module 30. Texture lookup table module 30 preferably stores multiple texture lookup tables, as explained in detail below. Simultaneously, the derivative signals generated by texture parameter interpolation module 3 are transmitted to a map selector module 28, which reads the derivative signals and generates a MAP SELECT signal asserted as an input of texture lookup table module 30.

Texture lookup table module 30 utilizes the (U,V) and MAP SELECT signals, in a manner discussed in greater detail in connection with FIGURE 5, to generate texture values which are asserted at one input of combining element 34. Illumination values generated by illumination interpolation module 2 are transmitted to another input of combining element 34.

Combining element 34, described in greater detail below in connection with FIGURE 5, arithmetically combines texture values from texture lookup table module 30 with illumination values from illumination interpolation module 2 to generate final bitmap values which are written or mapped into corresponding (X,Y) addresses in bitmap 6. Additionally, bitmap values at (X,Y) locations in bitmap 6 are fed back to combining element 34 for selected processing, as described in greater detail below in connection with FIGURE 5. In one embodiment of the invention, bitmap module 6 includes conventional video random access memory devices (VRAMs).

Bitmap values stored in bitmap 6, including a, R, G, B values, can be, for example, read out of bitmap 6 in a conventional manner, such as by a shift-read process if VRAMs are utilized, and transferred to digital to analog converters (DACs) 10, 12 and 14, respectively. The output analog signals from DACs 10, 12 and 14 can be transmitted to a conventional monitor 16 and converted into tangible form. Those skilled in the art will appreciate that the invention can be advantageously practiced in connection with a variety of multiplexing and color lookup table configurations or paths, and that the above described configuration is but one example of a preferred implementation of the invention.

In a further preferred embodiment of the invention, interpolation module 2 generates illumination values from a small number of selected initialization or "set-up" values. Illumination interpolation module 2 utilizes these values to generate further illumination values corresponding to other display pixels. In particular, both texture parameter interpolation module 3 and illumination interpolation module 2 utilize interpolation techniques which are described in greater detail in WO89/01206.

The conceptual basis of the operation of texture processor 4 is depicted in FIGURE 2, which shows transformation of texture information from texture space to object space, and mapping from object space to image space. The texture pattern shown in FIGURE 2A is a simple mathematical definition of a grid pattern in a texture space defined by two-dimensional coordinate system (u,v). FIGURE 2B depicts a three dimensional sample surface upon which the texture pattern of FIGURE 2A is to be mapped. The surface of FIGURE 2B is defined in an object space having three-dimensional coordinate system (x', y', z'). The texture-mapping process transforms the texture pattern depicted in FIGURE 2A onto the surface depicted in FIGURE 2B, and maps the transformed texture information into display space, illustrated in FIGURE 2C. The illustrated display space, corresponding to the image displayed by a monitor such as monitor 16 of FIGURE 1, is defined by two-dimensional (x, y) coordinates.

FIGURE 2A accordingly illustrates one possible texture pattern. Other texture patterns may be derived from digitized photographs or other input patterns.

More complex surface and texture patterns are depicted in FIGURES 3 and 4. FIGURE 3 depicts a computer rendered surface without texture. An image of this type can be generated by the apparatus described in WO89/01206 published 9 February 1989. FIGURE 4 depicts the surface of FIGURE 3 with a texture mapped flag pattern. The flag pattern is a texture, which texture processor 4 maps onto the surface shown in FIGURE 3.

In accordance with the invention, however, texture processor 4 transforms texture information from texture space directly to image space, without the intermediate step of mapping information into object space in a manner discussed in greater detail in connection with FIGURE 5.

An embodiment of texture processor 4 is illustrated in greater detail in FIGURE 5. The texture processor utilizes interpolators 18 to 27, scaling module 28, texture table 30, bitmap value multiplier 32 and arithmetic logic unit (ALU) 34.

Interpolators 18 to 27 are preferably constructed in accordance with principles disclosed in WO89/01206. In particular, interpolators 18 to 27 preferably execute interpolation of order N, where N is less than or equal to 2. As illustrated in FIGURE 5, interpolators 18 and 19 can, for example, generate values for use in conventional Z-buffer hidden surface calculations. Interpolators 20 to 23 can collectively form an illumination interpolation module for interpolating initial "set-up" data values to generate other illumination values. Interpolators 24-27 can collectively form a texture parameter interpolation module for interpolating initial "set-up" data values to generate texture parameter values U and V, and their derivatives dU/dX, dV/dX, dU/dY and dV/dY. The structure and operation of preferred interpolators are disclosed in WO89/01206, as is the use of initial, or "set-up" values.

An important feature of the invention is the use of interpolators to generate illumination values, texture parameter values, and Z values from initial set-up values. This interpolation process eliminates the necessity of calculating illumination, texture, and Z values independently for each pixel in the display, and accordingly increases computational efficiency and speed.

Interpolators 20-23 generate a, R, G, and B illumination values which are transmitted to one set of inputs of illumination blending module 32. Interpolators 24-27 generate U, dU/dX, V, dV/dX, dU/dY, and dV/dY signals transmitted to scaling block 28, which uses the signals to generate an X and Y address for a texture look-up table stored in lookup table module 30. The application of bitmap data value interpolators to generate signals representing partial derivatives is discussed in WO89/01206.

Texture table 30, in turn, provides a, R, G, and B texture values. Blending module 32 combines these texture values with the a, R, G, and B illumination values generated by interpolators 20-23, to yield final bitmap data values for writing into bitmap 6. In a preferred embodiment of the invention, ALU 34, which receives (X,Y) pixel value feedback from bitmap 6, executes arithmetic pixel combinations on the final bitmap data values.

Those skilled in the art will appreciate that FIGURE 5 depicts only one possible embodiment of the invention, and that interpolators 18-27 can be allocated to execute interpolation functions other than those designated in FIGURE 5. In particular, the apparatus can be configured so that a given interpolator will at certain times interpolate illumination values and at other times interpolate texture index values.

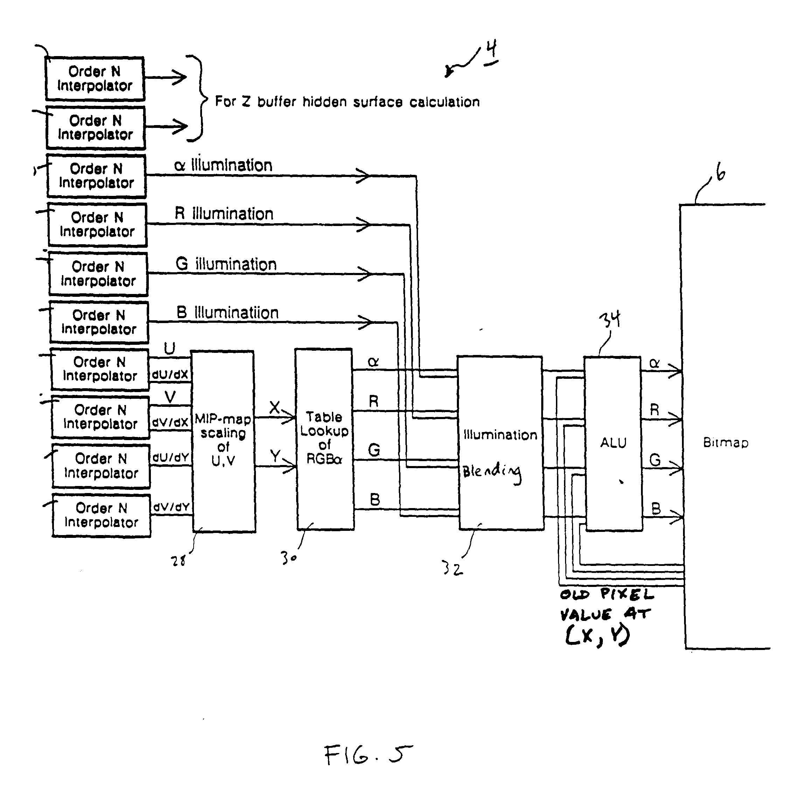

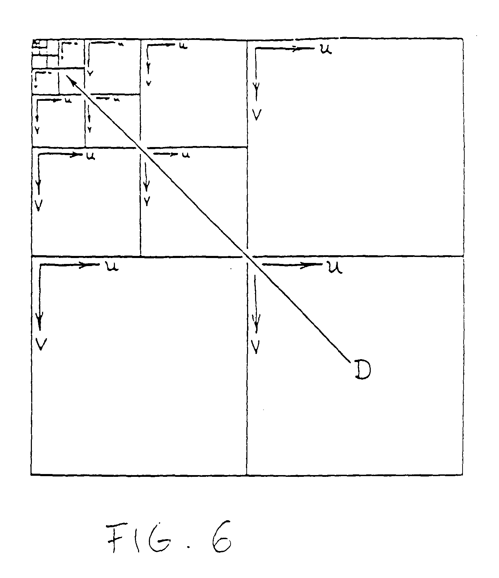

In a further preferred embodiment of the invention, texture table 30 is structured as a "mip-map." The hierarchy of a texture table 30 organized as a mip-map is illustrated in FIGURE 6. A mip-map is a pyramidal data structure having indexed, differently scaled prefiltered mappings of stored values. The differently scaled mappings represent differently scaled versions of the same data.

In the mip-map illustrated in FIGURE 6, U and V are the indexes, or spatial coordinates, of the map. D is a parameter used to select between different levels --i.e. differently scaled mappings-- of the pyramidal structure. Those skilled in the art will realize that corresponding points within different prefiltered maps can be addressed by a simple binary shift and add of an input set of index values U and V. The data at addresses in all the corresponding maps are therefore instantly available in response to the U, V input values. Mip-mapped data structures are described generally in Williams, Pyramidal Parametrics, Computer Graphics, Volume 17, No. 3, pp. 1-11, July 1983.

Thus, the U and V signals generated by interpolators 24 and 25, respectively, are the texture index values for mip-mapped texture table 30. In accordance with a preferred embodiment of the invention, scaling block 28 evaluates the partial derivatives of U and V with respect to X and Y (dU/dX, dV/dX, dU/dY, dV/dY), and utilizes the largest of the absolute values of the derivatives to select which size pre-filtered texture table mapping will be addressed for generating texture values.

As a result of this configuration, if texture changes rapidly with respect to image space coordinates --i.e. large partial derivative with respect to X or Y-- scaling block 28 selects a mapping having a lower resolution of texture values. Conversely, when texture changes slowly with respect to image space coordinates, scaling block 28 selects a mapping having a greater resolution of texture values. Scaling block 28 then generates an X, Y index signal for addressing the selected texture table.

In another preferred embodiment of the invention, scaling block 28 evaluates the partial derivative signals. In response to the partial derivative signals, two registers in scaling block 28 limit the range of differently scaled mappings which can be selected for generating texture values, thereby reducing the level of computational and storage resources which must be allocated to texture mapping.

It will thus be seen that the invention efficiently attains the objects set forth above. In particular, the invention provides improved computer graphics texture mapping apparatus and methods which operate with high speed and enhanced computational efficiency.

It will be understood that changes may be made in the above construction and in the foregoing sequences of operation without departing from the scope of the invention. For example, apparatus according to the invention can be configured to map a three dimensional texture into image space. Alternatively, a single "monochrome" set of texture values can be applied to generate each final bitmap data value. It is accordingly intended that all matter contained in the above description or shown in the accompanying drawings be interpreted as illustrative rather than in a limiting sense.

It is also to be understood that the following claims are intended to cover all the generic and specific features of the invention as described herein. Having described the invention, what is claimed as new and secured by Letters Patent is:

## Claims

1. Texture mapping apparatus for use in a computer graphics display controller system (1) for processing pixel values to generate electrical display signals to display an image of an object on a display element (16), the image being defined by display signals corresponding to selected display pixels of the image, the texture mapping apparatus (4) being characterized by
A. illumination value means (2), responsive to selected pixel addresses, for generating illumination values corresponding thereto,
B. a texture table (30) arranged to store texture values indexed by respective texture index values,
C. polynomial logic means (3) arranged to respond to said selected pixel addresses and to generate texture index values corresponding to those addresses, and to apply those texture index values to said texture table to generate texture values indexed thereby,
said polynomial logic means including texture index value interpolation means (24 - 27) arranged to generate said texture index values by interpolating, based on said selected pixel addresses, among initial texture index values associated with respective initial pixel addresses, and
D. combining means (34), in electrical communication with said illumination value means and said polynomial logic means arranged to respond to said illumination values and said texture values to generate display signals, corresponding to said selected pixels, for application to the display element (16) to display the image, said display signals being generated as an arithmetic combination of illumination values and texture values corresponding to like pixel addresses.

2. Apparatus according to claim 1, wherein said illumination value means (12) includes illumination value interpolation means (20 - 23) arranged to interpolate initial illumination values to generate further illumination values.

3. Apparatus according to claim 2, wherein said polynomial logic means (3) includes means (18 - 27) arranged to calculate polynomials of less than or equal to order two; and, for example, incremental evaluation means arranged to execute incremental evaluation of said polynomials.

4. Apparatus according to claim 1, wherein said illumination value means (2) and said polynomial logic means (18 - 27) collectively include at least one interpolator means arranged to :
(i) interpolate said illumination values during selected operational periods (20-23) and
(ii) interpolate said texture index values during other operational periods (24-27).

5. Apparatus according to claim 3, wherein said incremental evaluation means includes forward differencing means arranged to evaluate said selected polynomials.

6. Texture mapping apparatus according to claim 1, wherein
A. said polynomial logic means comprises texture table means (30) arranged to store texture values indexed by texture index values, said texture index values being equal to values of polynomial functions of said selected pixel addresses,
B. said interpolation means (24-27) includes
(i) means arranged to interpolate initial values of said polynomial functions to generate further values of said polynomial functions, said initial values of said polynomial functions corresponding to initial display pixel addresses and said further values of said polynomial functions corresponding to further display pixel addresses, and
(ii) mip-map means (28) arranged to retrieve indexed differently scaled mappings of said texture values, said differently scaled mappings being selected by at least one of said interpolated values of said polynomial functions,
C. said combining means (30) includes means arranged to arithmetically combine respective ones of said bit-map data values and said texture values associated with a selected one of said differently scaled mappings to generate display signals corresponding to said selected pixels, for application to the display element (16) to display the image.

7. Texture mapping apparatus according to claim 1, wherein
A. said polynomial logic means comprises
(i) texture table means (30) arranged to store texture values indexed by polynomial functions of said selected pixel addresses, said texture table means including
(ii) mip-map means (28) arranged to retrieve indexed differently scaled mappings of said texture values, said differently scaled mappings being selected by at least one of said interpolated values of said polynomial functions,
B. said combining means (34) includes means arranged to arithmetically combine respective ones of said bit-map data values and said texture values associated with a selected one of said differently scaled mappings to generate display signals corresponding to said selected pixels, for application to the display element (16) to display the image,
C. said polynomial logic means further comprises
(i) partial derivative means (24-27), in electrical circuit with said texture table means, arranged to compute partial derivatives of said at least one texture table parameter with respect to said selected pixel addresses, and
(ii) scaling means (28), in electrical circuit with said partial derivative means and said texture table means, arranged to select, in response to said computed partial derivatives, one of said mappings of said texture values for transmitting texture values to said combining means.

8. Apparatus according to claim 7, wherein said texture table means (30) includes limiting means arranged selectively limit the range of differently scaled mappings selectable by values of at least one said partial derivative.

9. Apparatus according to claim 3, wherein said polynomial logic means (3) includes non-incremental evaluation means arranged to execute non-incremetal evaluation of said selected polynomials.

10. Apparatus according to claim 9, wherein
A. said non-incremental evaluation means includes means arranged to execute direct evaluation of said selected polynomials; or
B. said non-incremental evaluation means includes means arranged to execute spline functions utilizing values of selected control points.

## Patentansprüche

1. Texturabbildungsvorrichtung für eine Verwendung in einem Computergraphikanzeigesteuerungssystem (1) zum Verarbeiten von Pixelwerten, um elektrische Anzeigesignale zu erzeugen, um ein Bild eines Objekts auf einem Anzeigeelement (16) anzuzeigen, wobei das Bild durch Anzeigesignale definiert ist, die ausgewählten Anzeigepixeln des Bildes entsprechen, wobei die Texturabbildungsvorrichtung (4) durch folgende Merkmale gekennzeichnet ist:
A. eine Beleuchtungswerteinrichtung (2), die auf ausgewählte Pixeladressen anspricht, um entsprechend denselben Beleuchtungswerte zu erzeugen,
B. eine Texturtabelle (30), die angeordnet ist, um Texturwerte zu speichern, die durch jeweilige Texturindexwerte indexiert sind,
C. eine Polynomlogikeinrichtung (3), die angeordnet ist, um auf die ausgewählten Pixeladressen anzusprechen und um entsprechend diesen Adressen Texturindexwerte zu erzeugen, und um diese Texturindexwerte auf die Texturtabelle anzuwenden, um Texturwerte, die durch dieselben indexiert sind, zu erzeugen,
wobei die Polynomlogikeinrichtung eine Texturindexwertinterpolationseinrichtung (24 - 27) umfaßt, die angeordnet ist, um die Texturindexwerte zu erzeugen, indem basierend auf den ausgewählten Pixeladressen zwischen Texturindexanfangswerten interpoliert wird, die jeweiligen Anfangspixeladressen zugeordnet sind, und
D. eine Kombiniereinrichtung (34), die mit der Beleuchtungswerteinrichtung und der Polynomlogikeinrichtung elektrisch verbunden ist, und die angeordnet ist, um auf die Beleuchtungswerte und die Texturwerte anzusprechen, um entsprechend den ausgewählten Pixeln Anzeigesignale für eine Anwendung bei dem Anzeigeelement (16) zu erzeugen, um das Bild anzuzeigen, wobei die Anzeigesignale als arithmetische Kombination der Beleuchtungswerte und der Texturwerte, die den gleichen Pixeladressen entsprechen, erzeugt werden.

2. Vorrichtung gemäß Anspruch 1, bei der die Beleuchtungswerteinrichtung (12) eine Beleuchtungswertinterpolationseinrichtung (20 - 23) aufweist, die angeordnet ist, um Anfangsbeleuchtungswerte zu interpolieren, um weitere Beleuchtungswerte zu erzeugen.

3. Vorrichtung gemäß Anspruch 2, bei der die Polynomlogikeinrichtung (3) eine Einrichtung (18 - 27), die angeordnet ist, um Polynome zweiter Ordnung oder niedriger zu berechnen; und beispielsweise eine Inkrementalauswertungseinrichtung umfaßt, die angeordnet ist, um eine Inkrementalauswertung der Polynome auszuführen.

4. Vorrichtung gemäß Anspruch 1, bei der die Beleuchtungswerteinrichtung (2) und die Polynomlogikeinrichtung (18 - 27) zusammen zumindest eine Interpolatoreinrichtung umfassen, die angeordnet ist, um
(i) die Beleuchtungswerte während der ausgewählten Betriebsperioden (20 - 23) zu interpolieren, und
(ii) die Texturindexwerte während weiterer Betriebsperioden (24 - 27) zu interpolieren.

5. Vorrichtung gemäß Anspruch 3, bei der die Inkrementalauswertungseinrichtung eine Vorwärtsdifferenzierungseinrichtung aufweist, die angeordnet ist, um die ausgewählten Polynome auszuwerten.

6. Texturabbildungsvorrichtung gemäß Anspruch 1, bei der
A. die Polynomlogikeinrichtung eine Texturtabelleneinrichtung (30) aufweist, die angeordnet ist, um Texturwerte zu speichern, die durch Texturindexwerte indexiert sind, wobei die Texturindexwerte gleich den Werten der Polynomfunktionen der ausgewählten Pixeladressen sind,
B. die Interpolationseinrichtung (24 - 37) folgende Merkmale umfaßt:
(i) eine Einrichtung, die angeordnet ist, um Anfangswerte der Polynomfunktionen zu interpolieren, um weitere Werte der Polynomfunktionen zu erzeugen, wobei die Anfangswerte der Polynomfunktionen den Anfangsanzeigepixeladressen entsprechen, und die weiteren Werte der Polynomfunktionen den weiteren Anzeigepixeladressen entsprechen, und
(ii) eine Mip-Tabellen-Einrichtung (28), die angeordnet ist, um indexierte, unterschiedlich skalierte Abbildungen der Texturwerte wiederzugewinnen, wobei die unterschiedlich skalierten Abbildungen durch zumindest einen der interpolierten Werte der Polynomfunktionen ausgewählt werden,
C. die Kombiniereinrichtung (30) eine Einrichtung umfaßt, die angeordnet ist, um jeweilige der Bittabellendatenwerte und der Texturwerte, die einer Ausgewählten der unterschiedlich skalierten Abbildungen zugeordnet sind, arithmetisch zu kombinieren, um entsprechend den ausgewählten Pixeln Anzeigesignale für eine Anwendung bei dem Anzeigeelement (18) zu erzeugen, um das Bild anzuzeigen.

7. Texturabbildungsvorrichtung gemäß Anspruch 1, bei der
A. die Polynomlogikeinrichtung folgende Merkmale aufweist:
(i) eine Texturtabelleneinrichtung (30), die angeordnet ist, um Texturwerte zu speichern, die durch Polynomfunktionen der ausgewählten Pixeladressen indexiert sind,
(ii) eine Mip-Tabellen-Einrichtung (28), die angeordnet ist, um indexierte, unterschiedlich skalierte Abbildungen der Texturwerte wiederzugewinnen, wobei die unterschiedlich skalierten Abbildungen durch zumindest einen der interpolierten Werte der Polynomfunktionen ausgewählt werden,
B. die Kombiniereinrichtung (34) eine Einrichtung aufweist, die angeordnet ist, um jeweilige der Bittabellendatenwerte und der Texturwerte, die einer Ausgewählten der unterschiedlich skalierten Abbildungen zugeordnet sind, arithmetisch zu kombinieren, um entsprechend den ausgewählten Pixeln Anzeigesignale für eine Anwendung bei dem Anzeigeelement (16) zu erzeugen, um das Bild anzuzeigen,
C. die Polynomlogikeinrichtung ferner folgende Merkmale aufweist:
(i) eine Teilableitungseinrichtung (24 - 27), die in einer elektrischen Schaltung mit der Texturtabelleneinrichtung vorgesehen ist, und die angeordnet ist, um Teilableitungen des zumindest einen Texturtabellenparameters hinsichtlich der ausgewählten Pixel adressen zu berechnen, und
(ii) eine Skalierungseinrichtung (28), die in einer elektrischen Schaltung mit der Teilableitungseinrichtung und der Texturtabelleneinrichtung vorgesehen ist und die angeordnet ist, um ansprechend auf die berechneten Teilableitungen eine der Abbildungen der Texturwerte zum Übertragen der Texturwerte zu der Kombiniereinrichtung auszuwählen.

8. Eine Vorrichtung gemäß Anspruch 7, bei der die Texturtabelleneinrichtung (3) eine Begrenzungseinrichtung umfaßt, die angeordnet ist, um den Bereich der unterschiedlich skalierten Abbildungen, der durch Werte der zumindest einen Teilableitung auswählbar ist, selektiv zu begrenzen.

9. Vorrichtung gemäß Anspruch 3, bei der die Polynomlogikeinrichtung (30) eine Nichtinkrementalauswertungseinrichtung umfaßt, die angeordnet ist, um eine Nichtinkrementalauswertung der ausgewählten Polynome auszuführen.

10. Eine Vorrichtung gemäß Anspruch 9, bei der
A. die Nichtinkrementalauswertungseinrichtung eine Einrichtung umfaßt, die angeordnet ist, um eine direkte Auswertung der ausgewählten Polynome auszuführen; oder
B. die Nichtinkrementalauswertungseinrichtung eine Einrichtung umfaßt, die angeordnet ist, um Spline-Funktionen auszuführen, die Werte von ausgewählten Steuerpunkten verwenden.

## Revendications

1. Appareil de topographie de texture à utiliser dans un système de commande (1) d'affichage de graphiques informatiques pour traiter des valeurs de pixels afin d'engendrer des signaux électriques d'affichage pour afficher une image d'un objet sur un élément d'affichage (16), l'image étant définie par des signaux d'affichage qui correspondent auxdits pixels sélectionnés d'affichage de l'image, l'appareil (4) de topographie de texture étant caractérisé par:
A. un moyen (2) de valeurs d'éclairage qui répond à des adresses sélectionnées de pixels, pour engendrer des valeurs d'éclairage qui y correspondent,
B. une table (30) de texture agencée pour mémoriser des valeurs de texture indexées par des valeurs respectives d'indices de texture,
C. un moyen (3) de logique polynomiale agencé pour répondre auxdites adresses sélectionnées de pixels et pour engendrer des valeurs d'indices de texture qui correspondent à ces adresses, et pour appliquer ces valeurs d'indices de texture à ladite table de texture pour engendrer des valeurs de texture ainsi indexées,
ledit moyen de logique polynomiale incluant un moyen d'interpolation (24 à 27) de valeurs d'indices de texture agencé pour engendrer lesdites valeurs d'indices de texture en interpolant, sur la base desdites adresses sélectionnées de pixels, entre des valeurs initiales d'indices de texture, associées à des adresses initiales respectives de pixels, et
D. un moyen combinatoire (34), en communication électrique avec ledit moyen de valeurs d'éclairage et ledit moyen de logique polynomiale, agencé pour répondre auxdites valeurs d'éclairage et auxdites valeurs de texture pour engendrer des signaux d'affichage, correspondant auxdits pixels sélectionnés, à appliquer à l'élément d'affichage (16) pour afficher l'image, lesdits signaux d'affichage étant engendrés en tant que combinaison arithmétique de valeurs d'éclairage et de valeurs de texture correspondant à des adresses semblables de pixels.

2. Appareil selon la revendication 1, dans lequel ledit moyen (12) de valeurs d'éclairage inclut un moyen d'interpolation (20 à 23) de valeurs d'éclairage agencé pour interpoler des valeurs initiales d'éclairage pour engendrer des valeurs additionnelles d'éclairage.

3. Appareil selon la revendication 2, dans lequel ledit moyen (3) de logique polynomiale inclut un moyen (18 à 27) agencé pour calculer des polynômes d'ordre inférieur ou égal à eux; et, par exemple, un moyen d'évaluation incrémentale agencé pour exécuter une évaluation incrémentales desdits polynômes.

4. Appareil selon la revendication 1, dans lequel ledit moyen (2) de valeurs d'éclairage et ledit moyen (18 à 27) de logique polynomiale incluent collectivement au moins un moyen interpolateur agencé pour:
(i) interpoler lesdites valeurs d'éclairage pendant des périodes opérationnelles sélectionnées (20 à 23) et
(ii) interpoler lesdites valeurs d'indices de texture pendant d'autres périodes opérationnelles (24 à 27).

5. Appareil selon la revendication 3, dans lequel ledit moyen d'évaluation incrémentale inclut un moyen de différenciation en sens direct agencé pour évaluer lesdits polynômes sélectionnés.

6. Appareil de topographie de texture selon la revendication 1, dans lequel:
A. ledit moyen de logique polynomiale comprend un moyen (30) de table de texture agencé pour mémoriser des valeurs de texture indexées par des valeurs d'indices de texture, lesdites valeurs d'indices de texture étant égales à des valeurs de fonctions polynomiales desdites adresses sélectionnées de pixels,
B. ledit moyen d'interpolation (24 à 27) inclut
(i) un moyen agencé pour interpoler des valeurs initiales desdites fonctions polynomiales pour engendrer des valeurs additionnelles desdites fonctions polynomiales, lesdites valeurs initiales desdites fonctions polynomiales correspondant à des adresses initiales de pixels d'affichage et lesdites valeurs additionnelles desdites fonction polynomiales correspondant à des adresses additionnelles de pixels d'affichage, et
(ii) un moyen (28) de topographie mip agencé pour restituer des topographies indexées, à échelles différentes, desdites valeurs de texture, lesdites topographies à échelles différentes étant sélectionnées par au moins l'une desdites valeurs interpolées desdites fonctions polynomiales,
C. ledit moyen combinatoire (30) inclut un moyen agencé pour combiner arithmétiquement des valeurs respectives, parmi lesdites valeurs de données de représentation binaire et lesdites valeurs de texture associées à une topographie sélectionnée parmi lesdites topographies à échelles différentes, de manière à engendrer des signaux d'affichage qui correspondent auxdits pixels sélectionnés, à appliquer à l'élément d'affichage (16) pour afficher l'image.

7. Appareil de topographie de texture selon la revendication 1, dans lesquels
A. ledit moyen de logique polynomiale comprend:
(i) un moyen (30) de table de texture agencé pour mémoriser des valeurs de texture indexées par des fonctions polynomiales desdites adresses sélectionnées de pixels, ledit moyen de table de texture incluant
(ii) un moyen (28) de topographie mip agencé pour restituer des topographies indexées, à échelles différentes, desdites valeurs de texture, lesdites topographies à échelles différentes étant sélectionnées par au moins l'une desdites valeurs interpolées desdites fonctions polynomiales,
B. ledit moyen combinatoire (34) inclut un moyen agencé pour combiner arithmétiquement des valeurs respectives, parmi lesdites valeurs de données de représentation binaire et lesdites valeurs de texture associées à une topographie sélectionnée parmi lesdites topographies à échelles différentes, de manière à engendrer des signaux d'affichage qui correspondent auxdits pixels sélectionnés, à appliquer à l'élément d'affichage (16) pour afficher l'image.
C. ledit moyen de logique polynomiale comprend en outre:
(i) un moyen (24 à 27) de dérivation partielle, en circuit électrique avec ledit moyen de table de texture, agencé pour calculer des dérivées partielles dudit paramètre unique au moins de table de texture par rapport auxdites adresses sélectionnées de pixels, et
(ii) un moyen (28) de mise à l'échelle, en circuit électrique avec ledit moyen de dérivation partielle et ledit moyen de table de texture, agencé pour sélectionner, en réponse auxdites dérivées partielles calculées, l'une desdites topographies desdites valeurs de texture pour transmettre des valeurs de texture audit moyen combinatoire.

8. Appareil selon la revendication 7 dans lequel ledit moyen (30) de table de texture inclut un moyen limiteur agencé pour limiter sélectivement la plage de topographies, à échelles différentes, susceptibles d'être sélectionnées par des valeurs d'au moins l'une desdites dérivées partielles.

9. Appareil selon la revendication 3, dans lequel ledit moyen (3) de logique polynomiale inclut un moyen d'évaluation non incrémentale, agencé pour exécuter une évaluation non incrémentale desdits polynômes sélectionnés.

10. Appareil selon la revendication 9, dans lequel
A. ledit moyen d'évaluation non incrémentale inclut un moyen agencé pour exécuter une évaluation directe desdits polynômes sélectionnés, ou
B. ledit moyen d'évaluation incrémentale inclut un moyen agencé pour exécuter des fonctions spline qui utilisent des valeurs de points sélectionnés de commande.
